# EUROPEAN PATENT SPECIFICATION

(11) **EP 4 294 640 B1**
(45) Date of publication and mention of the grant of the patent: **09.09.2026**
(21) Application number: 22755653.7
(22) Date of filing: 10.02.2022
(51) Int. Cl.: B41J 3/407, A47J 31/44, B05D 5/00, A23P 20/18, A23P 20/25

(54) **SUPPRESSING VIBRATIONS FOR IMPROVING QUALITY OF EDIBLE IMAGE FORMED ON FLOWABLE-MATTER SUBSTANCE**
UNTERDRÜCKUNG VON VIBRATIONEN ZUR VERBESSERUNG DER QUALITÄT EINES AUF EINER SUBSTANZ MIT FLIESSFÄHIGEM MATERIAL GEFORMTEN ESSBAREN BILDES
SUPPRESSION DE VIBRATIONS POUR AMÉLIORER LA QUALITÉ D'UNE IMAGE COMESTIBLE FORMÉE SUR UNE SUBSTANCE À BASE DE MATIÈRE FLUIDE

(30) Priority: 18.02.2021 US 202163150598 P
(43) Date of publication of application: 27.12.2023
(73) Proprietor: Ripples Ltd., 4951422 Petah Tikva (IL)
(72) Inventor: BROT, Mor Michael, 4906225 Petach Tikva (IL); FUCHS, Ophir, 7420517 Ness Ziona (IL); ELIAV, Eyal, 6522432 Tel Aviv (IL); JACOBI, Ori, 6228801 Tel Aviv (IL); HANUNA, Ouli, 6329415 Tel Aviv (IL); SADOT, Avner, 6515249 Tel Aviv (IL)
(74) Representative: Beck Greener LLP
(86) International application number: PCT/IB2022/051182
(87) International publication number: WO 2022/175790

(56) References cited:
- WO-A1-2022/074480
- CN-A- 106 079 456
- CN-A- 110 027 080
- CN-A- 111 976 130
- CN-B- 105 818 381
- CN-U- 209 269 398
- CN-U- 210 810 560
- CN-U- 211 807 878
- ES-U- 1 215 694
- KR-B1- 102 149 142
- US-A1- 2016 089 898
- US-B2- 10 813 488

## Description

### FIELD OF THE INVENTION

The present invention relates generally to systems for printing edible images on flowable-matter substrates, and particularly to methods and systems for improving quality of edible image printed on flowable matter.

### BACKGROUND OF THE INVENTION

Some systems are configured for printing images on flowable-matter substrates, such as coffee, beer and/or foam thereof. The quality of the printed image may be reduced in the presence of various types of internal and/or external vibrations during the printing process.

US2016/089898 discloses ink jet printing on a liquid medium using liquid inks having a thermos-inversion gelling property. The liquid ink can include a hyperthermo-gelling component having a gelling temperature. When the liquid ink is jetted on the liquid medium, the liquid ink can gel to form gel dots. The gel dots can resist against liquid dispersion, allowing the formation of a high resolution image on the liquid medium.

KR102149142 discloses an inkjet type food printer comprising: a housing having an opening on one side; a tray provided inside the housing and capable of placing one or more edible food products after opening the opening; a transfer operation part for guiding the tray to reciprocate linearly in the Y-axis direction. An edible liquid printing unit is provided for reciprocating in the X-axis direction in the inside of the housing and printing multiple colours of edible liquids on the food product along a specified trajectory through the complex motion of the tray linearly reciprocating in the Y-axis direction at each set position of the food product.

WO2022/074480 discloses a system including a tray, a printing assembly, an axis mechanism, a coupling mechanism and a cover. Tray is configured for placing thereon a sample including a first flowable-matter substrate (FMS). The printing assembly is configured to print an image of edible substance on a second FMS layer formed on first FMS.

ES1215694 discloses food decorating equipment, suitable for foams, creams, soft doughs of food products and solid foods. The equipment comprises a chassis, with two parts, one upper and one lower, with food ink cartridges, mounted on a carriage that moves horizontally inside the upper part above an opening on a vertical lifting platform located in the lower part. The lifting platform is integrated in the chassis of the equipment.

CN209269398 discloses a coffee latte art printing machine. To address the problem that beverages overflow due to the fact that chassis of such a machine vibrates easily in the ascending process a mechanism including a transmission belt and belt pulley is utilized.

CN210810560 discloses a clamping mechanism for a 3D printer, which is applied to the field of beverage equipment. The clamping mechanism for the 3D printer includes a chassis. A clamping device is arranged on the chassis, and includes a first base, a sliding rod, a first lead screw, a turbine, a second base, a worm, a third base, a connecting rod and an arc-shaped clamp.

### SUMMARY OF THE INVENTION

The invention is as defined in the claims.

An embodiment of the present invention that is described herein provides a system including: (a) a tray, configured for placing thereon a sample including at least a first flowable-matter substrate, (b) a printing assembly, configured to print an image, made from an edible substance, on a second flowable-matter substrate layer formed on the first flowable-matter substrate of the sample, (c) an axis mechanism, configured to mechanically support the tray and to control a distance between the sample and the printing assembly by moving the tray with the sample along an axis, (d) a support member, coupled to the printing assembly and configured to mechanically support the printing assembly, and (e) one or more vibration dampers, placed between (i) the printing assembly and (ii) at least one of the axis mechanism, the tray and the sample, and configured to suppress vibrations between (i) at least one of the printing assembly, the axis mechanism and the tray, and (ii) the sample.

In some embodiments, the one or more vibration dampers include a base, which is coupled to at least one of the support member and the axis mechanism, and is configured to suppress vibrations between the support member and the axis mechanism. According to the invention, the one or more vibration dampers include at least a compressible bumper (CB), which is coupled to a bracket of the axis mechanism and is configured to suppress vibrations applied to the sample through the axis mechanism. In yet other embodiments, the compressible bumper includes thermoplastic polyurethane (TPU).

In an embodiment, the TPU has a hardness between shore 40 and shore 70. In another embodiment, the one or more vibration dampers include a pad, which is positioned on the tray and is configured to suppress vibrations between the axis mechanism and the sample.

In some embodiments, the pad includes silicon having a hardness between shore 60 and shore 85. In other embodiments, the system including a motion assembly, which includes (i) a motor and (ii) a gear box having (a) a pulley and (b) a belt, the motion assembly is configured to drive the axis mechanism for moving the tray.

There is additionally provided, in accordance with an embodiment of the present invention, a method for improving printing quality of an edible image, the method includes: placing a sample including a flowable-matter substrate on a tray and moving the tray with the sample relative to a printing assembly. The edible image, which is made from an edible substance, is printed on a surface the flowable-matter substrate. Vibrations between (i) at least one of the printing assembly, the axis mechanism and the tray, and (ii) the sample, are suppressed.

There is further provided, in accordance with an embodiment of the present invention, a production method including coupling to a base (i) an axis mechanism for mechanically supporting and moving, along an axis, a tray for placing thereon a sample including a flowable-matter substrate, and (ii) a support member, which is coupled to and mechanically supporting, a printing assembly for printing an image, made from an edible substance, on the flowable-matter substrate. One or more vibration dampers are placed between (i) the printing assembly and (ii) at least one of the axis mechanism, the tray, and the sample, for suppressing vibrations between (i) at least one of the printing assembly, the axis mechanism, and the tray, and (ii) the sample.

The present invention will be more fully understood from the following detailed description of the embodiments thereof, taken together with the drawings in which:

### BRIEF DESCRIPTION OF THE DRAWINGS

Figs. 1A and 1B are schematic, pictorial illustrations of a system for printing edible images on flowable-matter substrates (FMSs), in accordance with embodiments of the present invention;
Fig. 2A and 2B are schematic, pictorial illustrations of an assembly for vertically-moving a sample comprising FMSs for printing edible images thereon, in accordance with an embodiment of the present invention;
Fig. 3A is a side-view of a printing assembly and panels, which are coupled to a base of the system, in accordance with an embodiment of the present invention;
Fig. 3B is a side-view of a tray and a vertical axis mechanism (VAM), which are coupled to a base of the system, in accordance with an embodiment of the present invention;
Fig. 4 is a schematic, pictorial illustration of compressible bumpers of the system, in accordance with an embodiment of the present invention;
Fig. 5 is a method for improving quality of an edible image printed on FMSs, in accordance with an embodiment of the present invention; and
Fig. 6 is a flow chart that schematically illustrates a method for producing a system configured for printing edible images on FMSs, in accordance with an embodiment of the present invention.

### DETAILED DESCRIPTION OF EMBODIMENTS

### OVERVIEW

Embodiments of the present invention that are described hereinbelow provide techniques for improving quality of an edible image formed on a flowable-matter substance (FMS) by suppressing vibrations that occur during the formation of the edible image. For example, vibrations produced when printing heads are moved relative to the FMS by an XY stage. Note that when the target substrate for forming the image thereon (e.g., by printing) comprises a flowable media, such as liquid and/or foam, the quality of the printed image is more susceptible to vibrations compared to target substrates having higher viscosity, such as solid substrates.

In some embodiments, a system for printing edible images on the top surface of the upper-most FMS comprises, *inter alia,* a printing assembly for producing the edible images, a tray, a vertical-axis mechanism (VAM) for moving the tray, a support member for mechanically supporting the printing assembly, and one or more vibration dampers.

In some embodiments, the tray is configured to carry a container, such as a glass or cup, having a first and second FMSs, such as a suitable foam produced over coffee or beer or a cocktail. The description below is related to beer and foam, but is equally applicable, *mutatis mutandis,* to any other suitable types of one or more FMSs.

In some embodiments, the printing assembly comprises one or more reservoirs of edible substance, e.g., malt, and one or more print heads configured to move relative to the foam and to print an image, made from the edible substance, on the upper surface of the foam. The VAM, which is described in detail below, is configured to control the distance between the foam and the printing assembly by moving the tray carrying the glass along an axis (e.g., a vertical axis) of the system.

In some embodiments, the VAM comprises (i) one or more rear shafts, coupled to a base of the system and extended along the vertical axis, and (ii) a rotatable shaft, such as a screw shaft, which is configured to be rotated by a motion assembly and to move the tray along the vertical axis.

In some embodiments, a processor of the system is configured to control the motion assembly and VAM for moving the tray along the vertical axis between (i) a loading/unloading position, in which the beer glass is placed on or removed from the tray, and (ii) a printing position, in which the print heads are moving relative to the beer glass for printing the edible image on the foam surface.

In some embodiments, the system comprises a cover, which is configured to cover at least the VAM. The cover may comprise one or more panels, e.g., two U-shaped panels, configured to surround at least the VAM, for encapsulation, and therefore, to protect the VAM against spillage of the aforementioned FMSs.

In some embodiments, the support member comprises one or more panels, which are coupled between the base of the system and the printing assembly, and are configured to mechanically supporting the printing assembly.

In some embodiments, the system comprises a housing, which is defined by one or more brackets, and is configured to contain gears (or other parts) of the motion assembly.

In some embodiments, the system comprises one or more vibration dampers, which are configured to suppress vibrations between (i) at least one of the printing assembly, the VAM, and other vibration sources of the system, and (ii) the flowable-matter substrate (e.g., beer and/or foam) contained within the glass. In the present example, the system comprises at least three vibration dampers, such as the base, a pad, and one or more compressible bumpers, which are all described below.

As described above, the base is coupled to both (i) the panels supporting the printing assembly, and (ii) at least the rear shafts of the VAM. In some embodiments, the base has sufficient mass (e.g., larger than about 3 Kg) and is sufficiently remote (e.g., between about 12 Cm and 27 Cm) from the beer when the printing assembly applies the edible image to the foam in the printing position. In such embodiments, the base is configured to absorb and/or suppress vibrations between the printing assembly (via the support member) and the tray (via the VAM).

In some embodiments, the pad, which is typically made from silicon or from any other suitable material or compound, is placed between the tray and the glass, and is configured, based on the mechanical properties of the silicon (e.g., hardness between about shore 60 and shore 85), to suppress vibrations between at least the VAM (via the tray) and the FMS contained in the glass.

According to the invention, the one or more compressible bumpers are coupled to at least one of the aforementioned brackets, and are configured to absorb and/or suppress vibrations between the mechanical assembly and the VAM. Note that, in the present example, the mechanical assembly and the VAM are not directly coupled to one another, and the compressible bumpers is positioned between the panels and the brackets. In this configuration, vibrations produced in the system, for example, in the printing assembly when printing the edible image, are suppressed by the compressible bumpers, and therefore, are not transferred to the FMS during the printing process.

The disclosed techniques improve the quality of edible images printed on edible FMS, by suppressing vibrations that may occur during the printing of the edible image, between assemblies or parts of the system, and the edible FMS.

### SYSTEM DESCRIPTION

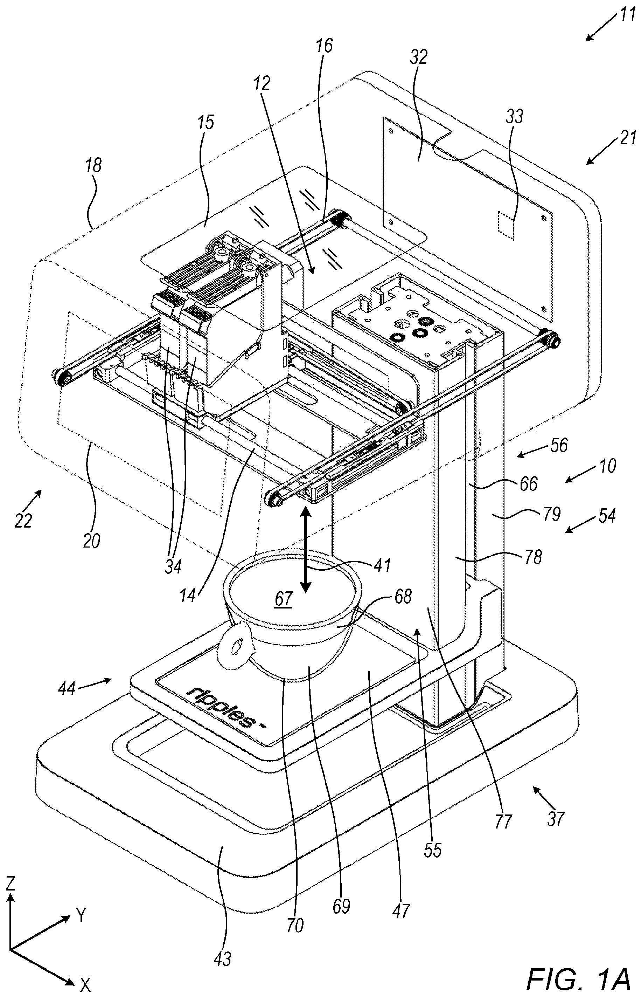

Fig. 1A is a schematic, pictorial illustration of a system 11 configured for printing edible images on one or more flowable-matter substrates (FMSs), in accordance with an embodiment of the present invention.

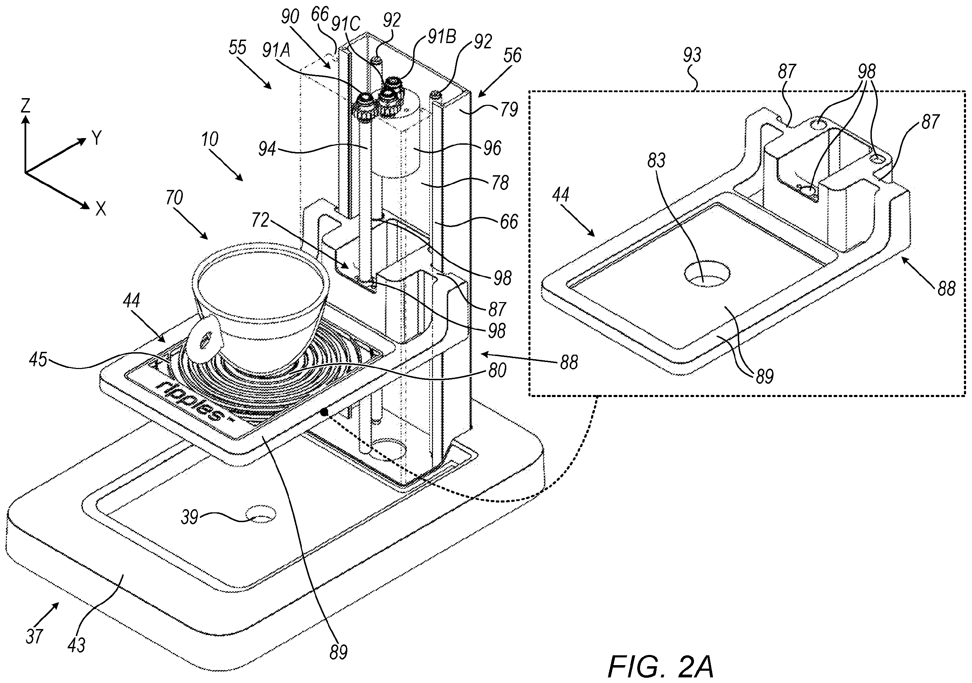

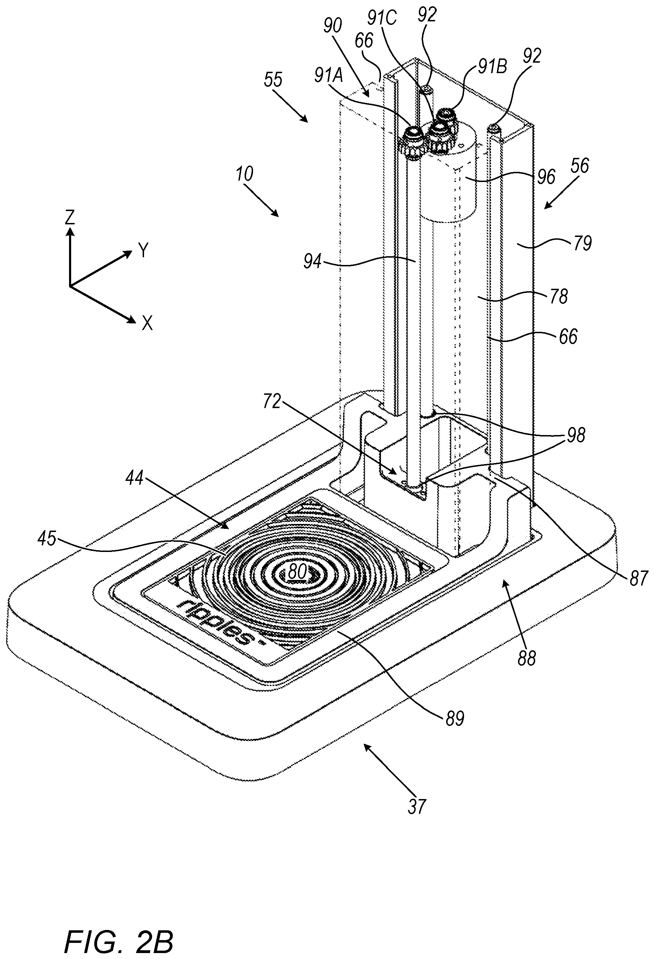

In some embodiments, system 11 comprises a printing assembly 22, a tray 44, and a vertical-axis mechanism (VAM) 10. In the present example, VAM 10 is positioned between printing assembly 22 and tray 44, and is configured to move tray 44, relative to printing assembly 22 along a Z-axis, which is the vertical axis of system 11. VAM 10 and tray 44 are described in detail in Figs. 2A and 2B below. Tray 44 is configured to be moved, along the Z-axis, between a base 37 of system 11 and printing assembly 22.

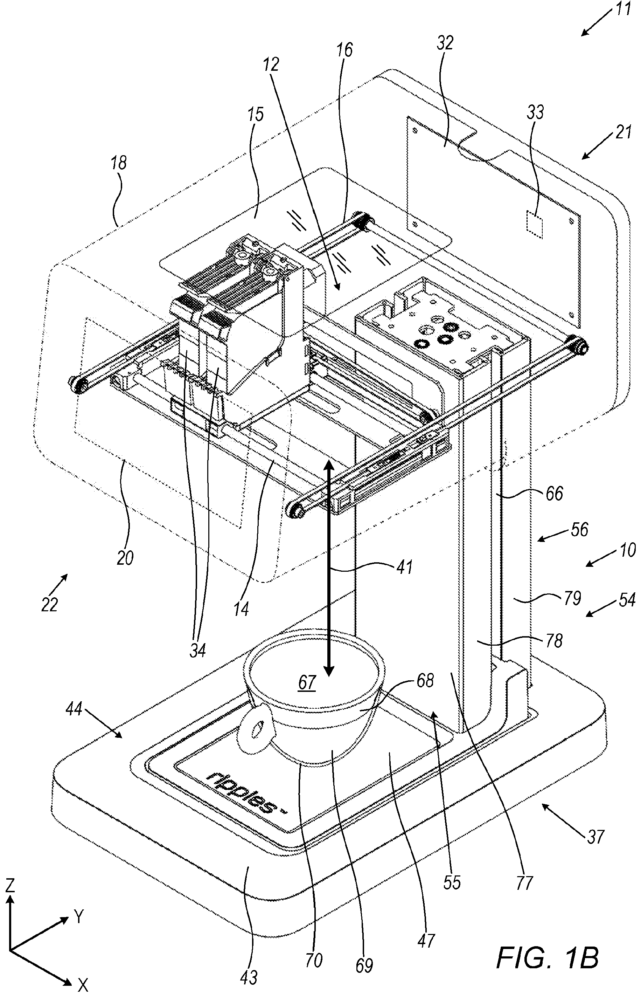

In the context of the present disclosure, the terms "vertical axis" and "Z-axis" are used interchangeably and refer to an axis for moving tray 44 along the Z-axis of the XYZ coordinate system of Fig. 1A (and of Figs. 1B, 2A and 2B below).

In some embodiments, tray 44 is configured to carry and move a sample, such as a container having one or more FMSs, along the vertical axis of system 11. In the present example, the container comprises a glass 70 or a cup, configured to contain the one or more FMSs described herein.

In the context of the present disclosure and in the claims, the term FMS refers to any matter that can flow, such as, but not limited to, edible-matter surfaces of liquid, e.g. beverages such as cocktail, milkshake, beer, coffee, tea, (e.g. chai, matcha, etc.), fruit shake, vegetable shake, soda, and yogurt. Additionally or alternatively, the FMS may comprise foam (e.g. foam of a beverage). Examples of foams may comprise beer foam, coffee crema foam, egg-whites foam, milk-foam, and milk-substitute foam, soybean foam, aquafaba foam, chickpea foam, nitro foam (meaning a beverage infused with nitrogen, causing a foam mixture of the beverage and nitrogen bubbles), quillaia extract, yucca extract, or any other suitable type of foam.

In the example of Fig. 1A, the FMSs comprise: (i) a drinkable liquid, such as a beer 69 poured into glass 70, and (ii) a malt-based foam 68 formed on top of beer 69 and having an upper surface, referred to herein as a surface 67. Alternatively, the FMSs may comprise: (i) liquid coffee instead of beer 69, and (ii) a frothed-milk instead of foam 68 placed on top of the coffee, or any other suitable types of FMSs, such as those described above.

In some embodiments, printing assembly 22 comprises a housing, also referred to herein as a cover 18, which is typically opaque and made of metal or polymer or a combination thereof, or any other suitable material. Alternatively, cover 18 may be translucent or completely transparent.

In some embodiments, printing assembly 22 comprises one or more print heads 34, configured to: (i) receive one or more types of edible ink (e.g., malt-based or coffee-based solutions), (ii) be moved along an X-axis 14 and/or a Y-axis 16 of an XY stage 12, and (iii) apply (e.g., by inkjet printing) the edible ink to surface 67 of foam 68, so as to produce an edible image thereon.

In some embodiments, printing assembly 22 may comprise a transparent window 15, which enables viewing the printing process and may also be used, for example, for maintenance operations of printing assembly 22 (e.g., replacement of print heads 34).

In some embodiments, system 11 comprises one or more substrates, in the present example printed circuit boards (PCBs) 32, having multiple active and passive electronic devices, such as a processor 33, which may be hidden by a package or between the PCBs, and therefore, shown as a dashed frame on PCB 32. PCBs 32 may comprise other devices (not shown), such as but not limited to memory devices, input/output (IO) ports and communication devices, chipsets, controllers, and other active and/or passive devices (e.g., one or more resistors, capacitors, and inductors).

Typically, processor 33 comprises a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

In some embodiments, system 11 comprises cables or any suitable wireless communication devices (not shown) configured to transmit signals exchanged between PCBs 32 and various components and modules of system 11, and between PCBs 32 and entities external to system 11. For example, processor 33 is configured to receive, from an external source, via the aforementioned cables or wirelessly, an image intended for being printed on surface 67. Subsequently, processor 33 is configured to transmit, e.g., to controllers of XY stage 12 and one or more print heads 34, a printing signal indicative of instructions for printing the edible image on surface 67 of foam 68.

In some embodiments, system 11 comprises front and back panels coupled, respectively, to the front and back sides of cover 18, and described herein. In the context of the present disclosure, the term "front side" refers to a side of system 11 facing an operator of system 11, e.g., a bartender, and the term "back side" refers to a side of system 11 facing, for example, a client that may receive glass 70 after printing the edible image on surface 67.

In some embodiments, a back panel 21 of system 11, which is facing the client, may comprise a fixed or interchangeable signage, configured to display any suitable content, such as but not limited to, a commercial advertisement. In alternative embodiments, back panel 21 may comprise a display, configured to display any suitable content, such as but not limited to, a gallery of digital images to be selected by the client, an image selected by the client or received from a mobile device of the client, a commercial video, an internet browser, broadcasted content (e.g., received from a selected television channel), a film selected by the client, or any other suitable content.

In some embodiments, the front panel may comprise any suitable type of a display 20, e.g., a touch screen of a flat panel, which is configured to serve as a graphical user interface (GUI) for controlling system 11. The GUI displayed on display 20 may be used by the bartender or by any other user of system 11, such as but not limited to, a service technician of system 11. Additionally or alternatively, system 11 may comprise a remote controlling device (not shown), such as a smartphone or a tablet, having a software interface with the GUI displayed by processor 33. In such cases, at least one of display 20 and back panel 21 may have additional or alternative uses.

This method of printing edible images on FMSs is implemented, for example, in the RIPPLE MAKER^{™} and systems, produced by Ripples^{™} LTD. (Petah Tikva, Israel) and is described in detail, for example, in U.S. Patent Application Publication 2009/0317519, which is incorporated herein by reference. Moreover, U.S. Patent Application Publication 2009/0317519 further describes examples of use cases of a GUI for controlling system 11, designs of digital images to be applied by system 11 to surface 67, and methods for receiving, displaying and applying digital images to surface 67.

In some embodiments, processor 33 is configured to control a motion assembly (shown in Figs. 2A and 2B below) and VAM 10 to move tray 44 along the vertical axis of system 11. In the present example, tray 44 is moved between (i) a loading/unloading position, in which glass 70 is placed on or removed from tray 44, and (ii) a printing position, in which print heads 34 are moving relative to glass 70 for printing the edible image on surface 67 of foam 68.

In the example of Fig. 1A, tray 44 is positioned at the printing position, however, tray 44 is lifted along Z-axis toward printing assembly 22, so as to position surface 67 of foam 68, at a specified distance 41 from printing assembly 22 (e.g., less than about 1 cm), so as to obtain the preferred conditions for printing the ink image of surface 67.

In some embodiments, system 11 may comprise one or more sensors (not shown), which are configured to produce signals used by processor 33 for controlling the position of tray 44. For example, a sensor may produce a signal indicative of a distance between two parts of system 11. In such embodiments, processor 33 is configured, based on the signal received from the sensor, to control the position of tray 44 along the vertical axis.

In the context of the present disclosure, the terms "about" or "approximately" for any numerical values or ranges indicate a suitable dimensional tolerance that allows the part or collection of components to function for its intended purpose as described herein.

In the example of system 11, glass 70 is carried by tray 44 and is moved by the moving assembly, as will be described in detail in Figs. 2A and 2B below. In some cases, when glass 70 is moved along the vertical axis, one or both of foam 68 and beer 69 may be spilled out of glass 70 and may wet VAM 10. Such wetting may interfere with the day-to-day operation of system 11, may require excess maintenance (at least to VAM 10), and in severe cases, may cause malfunctions in system 11.

In some embodiments, system 11 comprises a cover 54, which is configured to cover at least VAM 10 from being wetted by the aforementioned FMSs that may have been spilled.

In some embodiments, cover 54 may comprise one or more panels, in the present example, panels 55 and 56 having a U-shape as shown through printing assembly 22 and will be shown and described in more detail in Figs. 2A and 2B below. In some embodiments, panels 55 and 56 are configured to surround at least VAM 10, for encapsulating, and therefore, protecting VAM from being wetted by spillage of the aforementioned FMSs.

In some embodiments, panel 55 of cover 54 has a front surface, referred to herein as a surface 77, which is facing glass 70 and is configured to block the spillage of at least one of beer 69 and foam 68 from wetting VAM 10. In the present example, panel 55 has a single surface 77, but in other embodiments, panel 55 may have any other configuration suitable for blocking the spillage of at least one of foam 68 and beer 69 from wetting VAM 10. For example, instead of having a single surface 77, panel 55 may have two or more surfaces arranged along a slope and configured to convey the one or more spilled FMSs to a drain of system 11.

In some embodiments, panel 55 may have additional surfaces, such as a surface 78, which is being bent, e.g., orthogonally to surface 77. In such embodiments, adding to surfaces 77 and 78, an additional surface (not shown), which is bent orthogonally to surface 77 and positioned at the hidden side of panel 55 forming the U-shape of panel 55, as shown through printing assembly 22 and also shown and described in Figs. 1B, 2A and 2B below.

In some embodiments, panel 56 of cover 54 may also have a U-shape with a surface 79, which is positioned at a predefined distance from surface 78 of panel 55, so as to define, between each pair of surfaces 78 and 79, a slit 66, which is not facing glass 70 having the aforementioned FMSs (e.g., foam 68 and beer 69). In such embodiments, even if being spilled, foam 68 and/or beer 69 cannot wet VAM 10.

In some embodiments, surfaces 78 and 79, which are aligned with one another, e.g., in a YZ-plane of the XYZ coordinate system of Fig. 1A (and of Figs. 1B, 2A and 2B below), may be considered as a single surface at the YZ-plane, having slit 66, which extends along the Z-axis of system 11.

Note that cover 54, VAM 10 and additional parts and assemblies of system 11, which are related to the present disclosure, are described in detail in Figs. 2A and 2B below.

In other embodiments, in addition to or instead of one or more print heads 34, system 11 may comprise any other suitable apparatus for applying the edible image to surface 67 of foam 68. Such techniques for applying designs of the ink image to surface 67 are described, for example, in PCT International Publications WO 2007/013061 and WO 2005/069729, whose disclosures are all incorporated herein by reference.

In other embodiments, VAM 10 may be positioned at any other suitable location of system 11, and may have any other suitable configuration for moving printing assembly 22 and tray 44 relative to one another.

This particular configuration of system 11 is shown by way of example, in order to illustrate certain problems that are addressed by embodiments of the present invention and to demonstrate the application of these embodiments in enhancing the performance of such a system. Embodiments of the present invention, however, are by no means limited to this specific sort of example system, and the principles described herein may similarly be applied to other sorts of systems for printing edible substance on any suitable type of one or more FMSs.

Moreover, the description of system 11 is simplified for the sake of conceptual clarity, and the configuration of system 11 may comprise additional components, which are typically not essential for the description of the disclosed invention, and therefore, are intentionally omitted from the description of modules, assemblies and parts of system 11.

Fig. 1B is a schematic, pictorial illustration of system 11 at a loading/unloading position, in accordance with an embodiment of the present invention.

In some embodiments, in the example of Fig. 1B tray 44 is in the loading/unloading position such that a top surface 47 of tray 44 and a base surface 43 of base 37 of system 11 are approximately flush with one another. In some embodiments, base 37 may comprise a skeleton and one or more covers. The skeleton (not shown) is typically made from metal or any other suitable material and having a weight that is typically larger than about 3 Kg. The one or more covers, in the present example having surface 43, may comprise metal, polymer, ceramic, or any suitable combination thereof. In other embodiments, base 37 may comprise a unit comprising both the skeleton and the cover.

At this position, surface 67 is positioned at a different distance 41 from printing assembly 22, which is suitable for the loading/unloading position. For example, in the loading/unloading position the top surface of glass 70 is positioned at a distance sufficiently large (e.g., about 10 cm) for safely (i) loading glass 70 on tray 44, and (ii) unloading glass 70 off tray 44. At this position, system 11 is configured to prevent a collision between the glass and any part of printing assembly 22 during the loading/unloading of glass 70.

### BLOCKING SPILLAGE OF FLOWABLE-MATTER SUBSTRATE FROM WETTING THE VERTICAL-AXIS MECHANISM

Fig. 2A is a schematic, pictorial illustration of an assembly for vertically-moving glass 70, in accordance with an embodiment of the present invention. In the example of Fig. 2A, tray 44 is positioned at a printing position as shown in Fig. 1A above, or when tray 44 is being moved, along the Z-axis, between the loading/unloading and the printing positions described in detail in Figs. 1A and 1B above.

In some embodiments, VAM 10 comprises one or more shafts, in the present example, (i) two rear shafts 92 configured to support a coupling mechanism (CM) 88 (described in detail below) while being moved along the Z-axis, and (ii) a rotatable shaft, in the present example a screw shaft 94, configured to be rotated (as will be described below) for moving CM 88. Note that shafts 92 and 94 are threaded through bores 98 of CM 88, so that CM 88 is configured to slide along shafts 92 and move with shaft 94 along the Z-axis as shown in Fig. 2A and will be described in detail hereinbelow.

In some embodiments, system 11 comprises a motion assembly (MA) 90, which comprises a motor 96 (e.g., any suitable type of an electric motor (e.g., a brushless motor) having an internal encoder (not shown) and controlled by processor 33 or any other suitable type of a motion controller receiving instructions from processor 33.

In other embodiments, motor 96 may comprise a servomotor or a stepper motor comprising a rotary actuator (or linear actuator) that allows for precise control of angular position (or linear position), speed and acceleration of movement along the vertical axis.

In some embodiments, MA 90 comprises gears 91A, 91B and 91C. In the present configuration, gear 91A is coupled to and configured to rotate screw shaft 94, gear 91B is coupled to and configured to be rotated by motor 96, and gear 91C is integrated between gears 91A and 91B for transferring the rotational movement therebetween. In order to move CM 88 along the vertical axis, motor 96 rotates gear 91A. This causes rotation of gear 91C, which in turn causes rotation of gear 91A, and further rotation of screw shaft 94. Note that screw shaft 94 is configured to convert the rotational movement to a linear movement so as to move CM 88 along the vertical axis of system 11.

In other embodiments, MA 90 may comprise any other suitable type of gear box, such as but not limited to pulley and belt. In alternative embodiments, MA 90 may comprise a motor, which is directly connected to a shaft, in the present example, motor 90 may be directly coupled with screw shaft 94.

In some embodiments, each of panels 55 and 56 has a U-shape, so that when panels 55 and 56 are facing one another at a predefined distance between surfaces 78 and 79, they are substantially surrounding VAM 10 and MA 90 and are defining respective slit 66, as described, for example, in Fig. 1A above and as also shown in Fig. 1B above.

**In** some embodiments, CM 88 has a clamp 72, which is configured to couple between CM 88 and screw shaft 94. Note that clamp 72 and CM 88 are coupled to tray 44 so that when screw shaft 94 rotates, both CM 88 and tray 44 are moved along the vertical axis and bores 98 are sliding along shafts 92 so as to control smooth and straight movement along the vertical axis. **In** some cases, vibrations that may occur when glass 70 is moved along the vertical axis, are prone to spill foam 68 and/or beer 69 from glass 70, and/or to blur the image printed on surface 67 of foam 68. **In** some embodiments, the sliding of bores 98 along shafts 92 and 94 enable the aforementioned smooth movement of CM 88 and tray 44 along the vertical axis without the undesired aforementioned vibrations.

**In** some embodiments, CM 88 has one or more tenons 87 shaped as a neck within the block of CM 88. As shown in Fig. 2A, each tenon 87 of CM 88 is positioned within a respective slit 66 defined between surfaces 78 and 79 or panels 55 and 56, respectively.

In some embodiments, tenon 87 serves as a bridge connecting between a first section of CM 88, surrounded by panels 55 and 56, and a second section of CM 88, which is coupled to tray 44. In such embodiments, each tenon 87 is configured to slide along respective slit 66 for moving CM 88 and tray 44 along the vertical axis.

In some embodiments, tray 44 comprises a frame 89, which is coupled to CM 88. **In** the present example, frame 89 and CM 88 are made from a single (e.g., molded) part, but in other embodiments, CM 88 and frame 89 may be coupled to one another using any suitable technique and configuration.

In some embodiments, tray 44 comprises a pad 45 made from any suitable material, such as silicon or silicon matrix with suitable dopants. Pad 45 is permeable to passage of FMSs (e.g., beer 69 and foam 68) and other sorts of fluids, and surface 47 of pad 45 has a texture sufficiently-rough to prevent slip of glass 70 across an XY-plane of tray 44. Pad 45 has a round section 80, which shows (e.g., to the bartender) the intended position of glass 70 on pad 45. Round section 80 is shown in more detail in Fig. 2B below. Note that pad 45 is inserted into frame 89 when positioning glass 70 on tray 44, and may be removed from frame 89, e.g., for the purpose of cleaning frame 89 and/or pad 45.

In some embodiments, pad 45 has a pattern of concentric circles, but in other embodiments, in addition to or instead of the concentric circles pad 45 may have any other suitable pattern, or alternatively, may have a uniform surface without any pattern. Moreover, the pattern of pad 45 may be customized with any sort of one or more labels. **In** the present example, pad 45 has the ripples^{™} label, but in other embodiments, pad 45 may have any other label, e.g., customized for a commercial purpose, such as a brand of a beer or coffee supplier. As described above, pad 45 may have a uniform and/or flat upper surface, without any label.

Reference is now made to an inset 93 showing the aforementioned single part comprising frame 89 of tray 44 and CM 88. Note that pad 45, panels 55 and 56, and shafts 92 and 94 are removed herein for the sake of the conceptual clarity and for more understood presentation of the following description.

In some embodiments, frame 89 has an opening 83, configured to pass FMSs and other fluids, which are spilled over tray 44, e.g., to a pipeline of a sewerage system. Inset 93 also shows in greater clarity, bores 98, which are sliding along respective shafts 92 and 94, and tenons 87, which are sliding along respective slits 66.

Reference is now made back to the general view of Fig. 2A. In some embodiments, base 37 has an opening 39, which is typically aligned with opening 83 of CM 88, and may also be aligned with round section 80 of pad 45. Opening 83 and 39 are aligned for passing FMSs and other fluids to the aforementioned pipeline of the sewerage system.

Fig. 2B is a schematic, pictorial illustration of VAM 10 and tray 44 used for vertically-moving glass 70 and of panels 55 and 56 and CM 88, in accordance with an embodiment of the present invention.

In the example of Fig. 2B, tray 44 is positioned at a loading/unloading position as shown in Fig. 1B above. Moreover, glass 70 is not placed on pad 45 of tray 44, so as to show one example embodiment of pad 45.

As described in Fig. 1B above, top surface 47 of tray 44 and base surface 43 of base 37 are approximately flush with one another. In some embodiments, by having surfaces 43 and 47 flush on XY-plane, the user (e.g., the bartender) of system 11 can move glass 70 across the XY-plane without having an undesired collision between class 70 and any part of system 11, such as with frame 89 of tray 44.

In some embodiments, in the configuration shown and described in Figs. 2A and 2B, any spillage of one or more FMSs and/or other fluids, is blocked by panels 55 and 56 (and mostly by surface 77 of panel 55 as described, for example, in Figs. 1A and 1B above) and cannot wet any of VAM 10 and/or MA 90 and other components surrounded by panels 55 and 56. Moreover, in some embodiments, frame 89 may have suitable slopes such that any of the spilled FMSs (and/or other fluids) are washed away, through opening 83, to the sewerage, and therefore, are not remained in system 11. Note that even in the loading/unloading position, panels 55 and 56 are almost completely encapsulating VAM 10 (except for slit 66) from being wetted by the FMSs. Moreover, because slit 66 is narrow, e.g., having a width (along Y-axis) between about 7 mm and 10 mm, and is not facing glass 70, even massive spillage of FMS, cannot wet VAM 10.

These particular configurations of VAM 10, MA 90, CM 88, tray 44, and panels 55 and 56 of system 11 are shown by way of example, in order to illustrate certain problems that are addressed by embodiments of the present invention and to demonstrate the application of these embodiments in enhancing the performance of such a system. Embodiments of the present invention, however, are by no means limited to these specific sort of example modules, assemblies and parts described above, and the principles described herein may similarly be applied to other sorts of modules, and/or assemblies and/or parts of other systems configured to apply images (using printing or other suitable techniques) to one or more surfaces of any one or more flowable-matter substrates.

### SUPPRESSING VIBRATIONS IN SYSTEM FOR PRINTING EDIBLE IMAGE ON FLOWABLE-MATTER SUBSTANCE

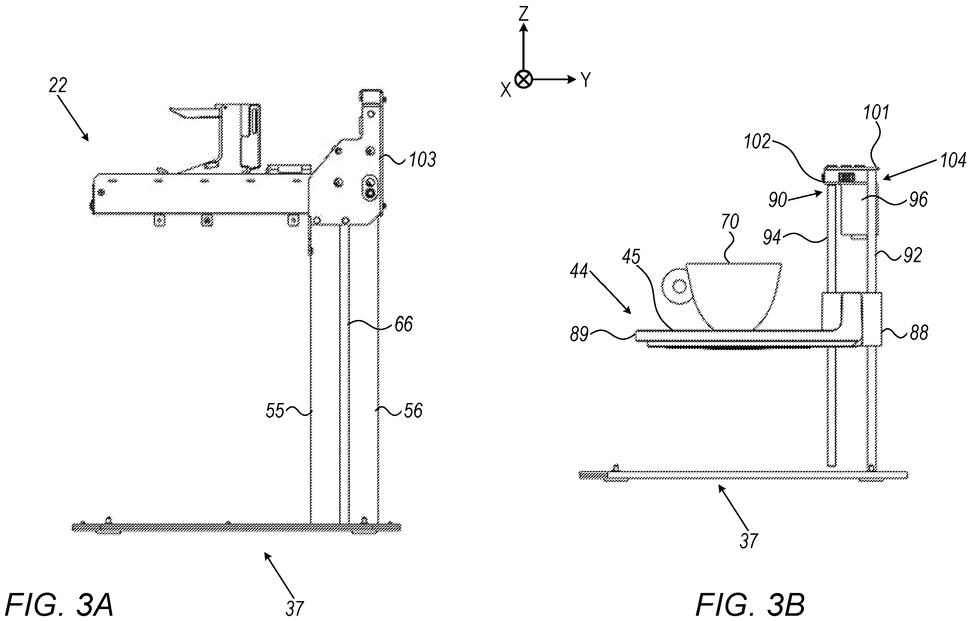

Fig. 3A is a side-view of printing assembly 22, panels 55 and 56, and base 37, in accordance with an embodiment of the present invention.

In some embodiments, panels 55 and 56 are coupled between a chassis 103 of printing assembly 22 and base 37. In the present configuration shown in Fig. 3A, panels 55 and 56 are serving, *inter alia,* as a support member, which is configured to mechanically support printing assembly 22. As shown in Fig. 3A, panels 55 and 56 are coupled to base 37.

Fig. 3B is a side-view of tray 44 and VAM 10, which is coupled to base 37, in accordance with an embodiment of the present invention. In some embodiments, tray 44 comprises, *inter alia,* frame 89 and is coupled with CM 88. In some embodiments, tray 44 is configured to be moved along an axis, in the present example along Y-axis, by screw shaft 94 and to slide along rear shafts 92. Glass 70 is positioned on pad 45 and is moved together with tray 44, as described in detail, for example, in Figs. 2A and 2B above.

In some embodiments, system 11 comprises (i) a bracket 101 positioned between MA 90 and chassis 103 (shown in Fig. 3A above), and (ii) a bracket 102 positioned between motor 96 and gears 91A, 91B and 91C, which are described in detail in Figs. 2A and 2B above.

Note that in the present configuration, there is a gap between bracket 101 and chassis 103, so as to prevent direct transfer of vibrations between printing assembly 22 and the FMS (e.g., beer 69 and foam 68) contained in glass 70. In some embodiments, the size of the gap may be between about 1 mm and 5 cm, or any other suitable size. The vibrations or an impact may be generated by an external force applied to system 11, or may be generated within system 11 as will be described herein.

In some embodiments, system 11 comprises a housing 104, which is defined by brackets 101 and 102, and is configured to contain gears 91A, 91B and 91C of MA 90.

In some cases, when XY stage 12 moves print heads 34 for applying the edible image to surface 67 of foam 68, the motion may cause vibrations of system 11 in XY-plane. Such vibrations may undesirably move the flowable-matter substrate contained within glass 70 (e.g., foam 68 and beer 69), and thereby, may reduce the quality of the edible image printed on surface 67.

As described above, the vibrations of beer 69 and foam 68 may interfere with the printing process of the edible image on surface 67, and in severe cases (e.g., vibrations with high amplitude), may result-in undesired spillage of beer 69 and/or foam 68, as described for example in Figs. 2A and 2B above.

In some embodiments, system 11 comprises multiple vibration damping mechanisms, also referred to herein as vibration dampers, which are configured to suppress vibrations between (i) printing assembly 22 and other vibration sources of system 11, and (ii) the flowable-matter substrate contained within glass 70 (e.g., foam 68 and beer 69), or any other sample comprising any suitable type of flowable-matter substrate.

In some embodiments, base 37 serves as a first vibration damper by: (i) being coupled separately to (a) panels 55 and 56, and (b) VAM 10, (ii) having sufficient mass (e.g., larger than about 3 Kg), and (iii) being sufficiently remote (e.g., between about 12 Cm and 27 Cm) from beer 69 and foam 68 when printing assembly 22 applies the edible image to surface 67 of foam 68.

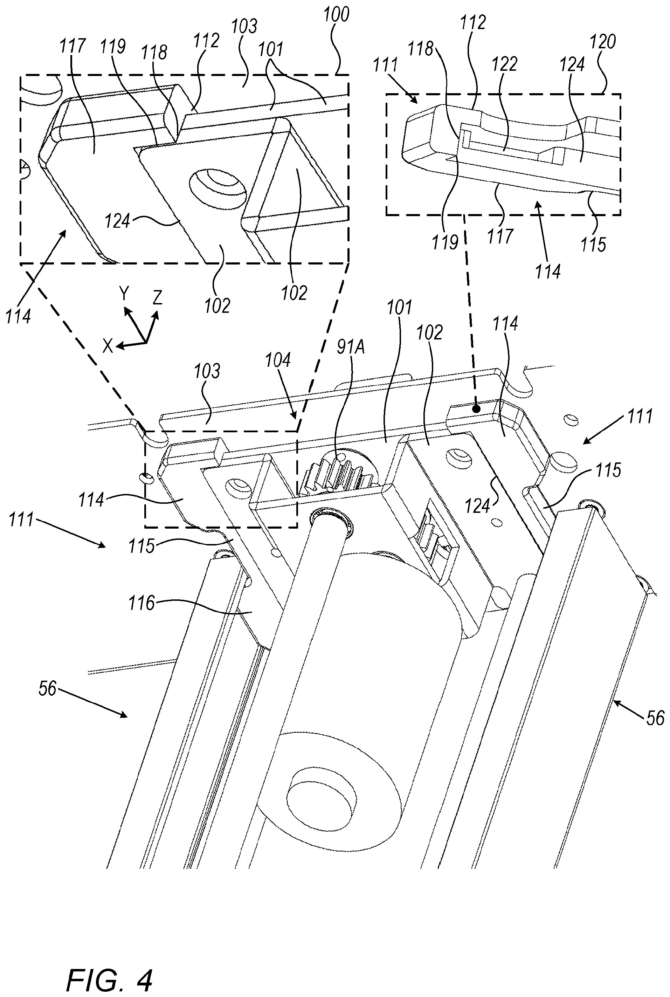

Note that VAM 10 and panels 55 and 56 are both coupled to base 37 but not directly to one another as will be depicted in detail in Fig. 4 below. Therefore, VAM 10 and panels 55 and 56 cannot transfer vibrations between one another directly, but via the one or more vibration dampers, such as base 37.

In some embodiments, pad 45, is made from a suitable type of silicon (or another suitable substance or compound) having hardness between about shore 60 and shore 85. In the context of the present disclosure and in the claims, the terms "shore" and "shore hardness" are used interchangeably and are defined based on a durometer scale of the American Society for Testing and Materials (ASTM) also denoted ASTM international.

In some embodiments, the substance of pad 45 may be selected so that pad 45 is configured to serve, *inter alia,* as a second vibration damper, which is configured to suppress vibrations between system 11 (e.g., vibrations produced by XY stage 12 in XY-plane, and/or by VAM 10 along Z-axis, and/or any other sort of undesired vibrations) and the sample (e.g., beer 69 and foam 68) contained in glass 70.

Fig. 4 is a schematic, pictorial illustration of compressible bumpers (CBs) 111 implemented in system 11, in accordance with an embodiment of the present invention.

In some embodiments, CBs 111 are configured to serve as a third vibration damper between printing assembly 22 and VAM 10, so as to improve the quality of the edible image formed on surface 67 by printing assembly 22, and in high-amplitude vibrations, to prevent spillage of beer 69 and/or foam 68.

In some embodiments, CB 111 is made from thermoplastic polyurethane (TPU) or from any other suitable material, which is configured to absorb and/or suppress vibrations between to elements coupled thereto. In the present example, the TPU has a hardness between about shore 40 and shore 70, and typically about shore 50, also referred to herein as shore hardness 50, which is based on a durometer scale of ASTM and/or ASTM international, the durometer scale is also described above for the hardness of pad 45.

In other embodiments, CB 111 may comprise any other suitable substance having any suitable mechanical properties, such as but not limited to durability and/or hardness other than shore 50. Note that in the configuration of system 11, the compressibility of CB 111 is configured to suppress vibrations between separate parts of system 11, which are coupled to CB 111 as described in detail below.

In the present example, bracket 102 has openings for connecting between the screw shaft and the motor (described in detail in Figs. 2A and 2B above) and the gears of MA 90. In the present configuration, a first opening for connecting between the screw shaft and gear 91A, and a second opening for connecting between the motor and gear 91B (shown in detail in Figs. 2A and 2B above).

In some embodiments, bracket 102 has multiple surfaces, so as to form facets of housing 104, and also to be coupled with bracket 101. In the present example, bracket 101 has a flat shape and serves, *inter alia,* as the upper facet of housing 104.

In other embodiments, housing 104 mat have any other suitable shape with or without brackets. Moreover, brackets 101 and 102 may have any other suitable design to fulfill the functionality described above and below, and/or any other functionality of system 11.

In some embodiments, each CB 111 comprises a section 116, which snugly fits into the shape of panel 56, and serves as a buffer between (i) panel 56 and (ii) brackets 101 and 102 of housing 104. Similarly, each CB 111 comprises a section 114, which snugly fits into the shape of panel 55 (not shown for the sake of presentation and conceptual clarity), and serves as a buffer between (i) panel 55 and (ii) brackets 101 and 102 of housing 104. Each CB 111 further comprises a section 115 between sections 114 and 116. Note that, in the present example, section 115 is narrower than sections 114 and 116, so as to fit sections 114 and 116 into the shape of panels 55 and 56, respectively.

In some embodiments, chassis 103 of printing assembly 22 is coupled to and supported by panels 55 and 66. Note that, as described above, chassis 103 is decoupled from and floating above bracket 101 and CB 111. In such embodiments, CB 111 is configured to suppress vibrations transferred between (i) panels 55 and 56, which are coupled with chassis 103 of printing assembly 22, and (ii) at least one of brackets 101 and 102, which are coupled with VAM 10. For example, when chassis 103 vibrates in XY-plane, the vibrations are transferred to panel 56 and are suppressed by sections 115 and 116 of CB 111. Similarly, when chassis 103 vibrates in XY-plane, the vibrations are transferred to panel 55 and are suppressed by sections 114 and 115 of CB 111.

Reference is now made to an inset 120 showing a schematic, pictorial illustration of the internal structure of sections 114 and 115 of CB 111 in accordance with embodiments of the present invention. In the example of inset 120, CB 111 is rotated (e.g., about Z-axis), so as to show the internal structure thereof. Note that the internal structure is depicted herein, *inter alia,* for the sake of conceptual clarity, and in other embodiments, CB 111 may have any other suitable shape, and or may comprise any suitable number of sections that may be coupled together or separated from one another.

In some embodiments, section 114 comprises a trench 122, which is configured to fit over bracket 101, and surfaces 118 and 124, which are placed in contact with brackets 101 and 102. Section 114 of CB 111 further comprises a surface 119, which is place in contact with bracket 102. Moreover CB 111 comprises a section 112, which is placed over the upper surface of bracket 101, and a lower surface 117.

Reference is now made back to the general view of Fig. 4. Note that in the present configuration, system 11 comprises two CBs 111, and each CB 111 has a symmetrical configurations, such that sections 114 and 116 have the same shape.

In other embodiments, each CB may have a different shape, and may have a symmetrical or asymmetrical configuration.

Reference is now made to an inset 100 showing how section 114 of CB 111 fits over brackets 101 and 102.

In some embodiments, surface 124 of section 114 is placed in contact with bracket 102, so as to suppress vibrations generated, e.g., in X-axis, between printing assembly 22 (via panel 55) and VAM 10 (via brackets 101 and 102). Surface 118 is place in contact with brackets 101 and 102, and surface 119 is placed in contact with bracket 102, so as to suppress vibrations generated e.g., in Y-axis, between printing assembly 22 (via panel 55) and VAM 10 (via brackets 101 and 102). Section 112 is placed over the upper surface of bracket 101, so as to suppress vibrations generated e.g., in Z-axis, between printing assembly 22 (via chassis 55) and VAM 10 (via brackets 101 and 102). Note that this structure is configured to suppress any superposition of vibrations generated in the XYZ coordinates of system 11.

In some embodiments, section 112 of CB 111 is typically decoupled from chassis 103 of printing assembly 22, and yet, serves as a buffer and a vibration damper in case the amplitude of vibrations formed along Z-axis is sufficiently-high. In other words, a gap between (i) section 112 of CB 111, and (ii) chassis 103 (or any other part) of printing assembly 22, is retained when placing CB 111 in contact with brackets 101 and 102. This gap reduces direct transfer of vibrations between printing assembly 22 and VAM 10, so that one or more CBs 111 typically suppress vibrations between (i) panels 55 and/or 56, and (ii) VAM 10.

In such embodiments, by placing brackets 101 and/or 102 with (i) surfaces 118, 119 and 124, and (ii) section 112, CB 111 is configured to suppress any vibrations produced between printing assembly 22 and VAM 10.

Based on the embodiments described in Figs. 3A, 3B and 4, any vibrations produced in XYZ-axes are suppressed by one or more of the first, second and third vibration dampers described above, and thereby, improving the quality of the edible image produced by printing assembly 22 on surface 67 of foam 68.

This particular configuration of the vibration dampers of system 11 are shown by way of example, in order to illustrate certain problems that are addressed by embodiments of the present invention and to demonstrate the application of these embodiments in enhancing the performance of such a system. Embodiments of the present invention, however, are by no means limited to this specific sort of example configuration, and the principles described herein may similarly be applied to other sorts of vibration damping techniques used in any sort of a system for printing edible substance on any suitable type of one or more FMSs. Specifically, embodiments of the present invention are by no means limited to this particular configuration of CB 111, and the principles described herein may similarly be implemented in any other suitable design and/or shape of any other sort of a compressible bumper.

### SUPPRESSING VIBRATIONS FOR IMPROVING QUALITY OF EDIBLE IMAGE FORMED ON FLOWABLE-MATTER SUBSTANCE

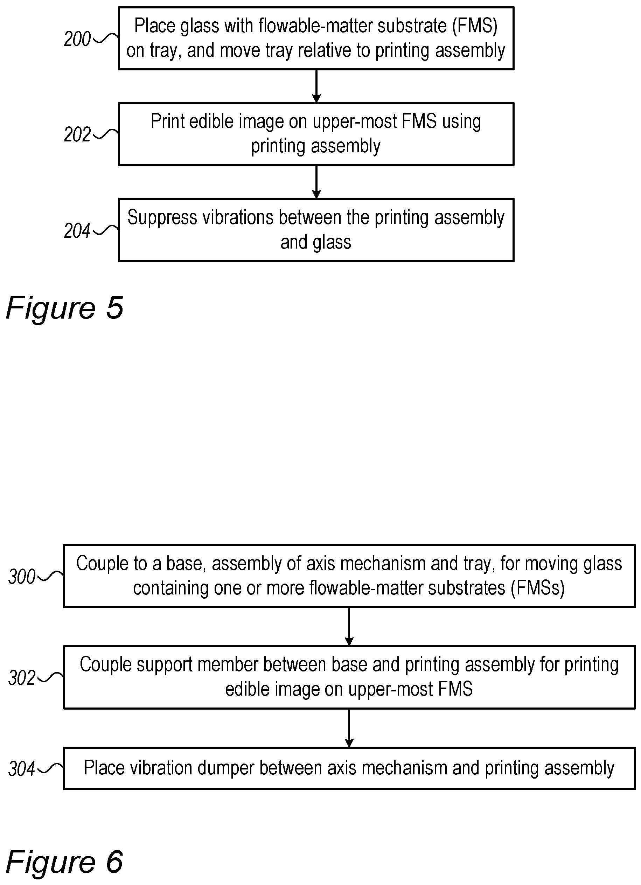

Fig. 5 is a method for improving quality of an edible image printed on FMSs, in accordance with an embodiment of the present invention. In the present example, the FMS comprises beer 69 and foam 68 contained in glass 70, wherein the image is produced on surface 67 of foam 68.

The method begins at a FMS positioning step 200, with placing glass containing beer 69 and foam 68 on tray 44, and moving tray 44 relative to printing assembly 22, as described in detail in Figs. 1A-2B above.

At an image forming step 202, the edible image is applied to surface 67 of foam 68, as described in detail, for example, in Figs. 1A and 1B above.

At a vibration suppression step 204 that concludes the method, vibrations formed in system 11 are suppressed in order to improve the quality of the edible image formed on surface 67. In some embodiments, the method comprises suppressing the vibrations between printing assembly 22 and the FMS (e.g., beer 69 and foam 68) contained within glass 70. In some embodiments, steps 202 and 204 are typically carried out simultaneously, but are presented herein in different steps for the sake of conceptual clarity.

### PRODUCING A SYSTEM FOR PRINTING EDIBLE IMAGES ON FLOWABLE-MATTER SUBSTRATES

Fig. 6 is a flow chart that schematically illustrates a method for producing at least part of system 11, in accordance with an embodiment of the present invention. Note that the method of Fig. 6 is focused on assembling the vibration dampers, and particularly compressible bumper 111, in system 11.

The method begins at a tray and VAM assembling step 300, with coupling at least rear shafts 92 of VAM 10 to base 37, sliding tray 44 that is coupled to CM 88 along rear shafts 92 and screw shaft 94, and coupling between MA 90 and screw shaft 94, as depicted, for example, in Fig. 2A above.

At a support member coupling step 302, panels 55 and 56 are assembled between base 37 and chassis 103 of printing assembly 22. Note that printing assembly 22 is assembled for printing edible images on the upper-most FMS, in the present example, on surface 67 of foam 68.

At a vibration coupling assembling step 304, brackets 101 and 102 are assembled in VAM 10 of system 11, and compressible bumper 111, which is configured to suppress vibrations between (a) printing assembly 22 and (b) tray 44 and VAM 10, is assembled between (i) panels 55 and 56, and (ii) brackets 101 and 102, as described in detail in Fig. 4 above.

Although the embodiments described herein mainly address systems for printing edible images on flowable-matter substrates, the methods and systems described herein can also be used in other applications, such as in any sort of food printing systems.

It will thus be appreciated that the embodiments described above are cited by way of example, and that the present invention is not limited to what has been particularly shown and described hereinabove.

## Claims

1. A system (11), comprising:
a tray (44), which is configured for placing thereon a sample comprising at least a first flowable-matter substrate (69);
a printing assembly (22), which is configured to print an image, made from an edible substance, on a second flowable-matter substrate layer (68) formed on the first flowable-matter substrate (69) of the sample;
an axis mechanism (10), which is configured to mechanically support the tray (44) and to control a distance (41) between the sample and the printing assembly (22) by moving the tray (44) with the sample along an axis;
a support member (55, 56), which is coupled to the printing assembly (22) and is configured to mechanically support the printing assembly (22); and
one or more vibration dampers (37, 45, 111), placed between (i) the printing assembly (22) and (ii) at least one of the axis mechanism (10), the tray (44), and the sample, and configured to suppress vibrations between (i) at least one of the printing assembly (22), the axis mechanism (10) and the tray (44), and (ii) the sample, wherein at least one of the one or more vibration dampers comprise at least a compressible bumper (CB) (111), which is coupled to a bracket (102) of the axis mechanism (10) and is configured to suppress vibrations applied to the sample through the axis mechanism (10).

2. The system according to claim 1, wherein the one or more vibration dampers comprise a base, which is coupled to at least one of the support member and the axis mechanism, and is configured to suppress vibrations between the support member and the axis mechanism.

3. The system according to claim 1, wherein the compressible bumper comprises thermoplastic polyurethane (TPU).

4. The system according to claim 3, wherein the TPU has a hardness between shore 40 and shore 70.

5. The system according to any of claims 1 and 2, wherein the one or more vibration dampers comprise a pad, which is positioned on the tray and is configured to suppress vibrations between the axis mechanism and the sample.

6. The system according to any of claims 1 and 2, wherein the pad comprises silicon having a hardness between shore 60 and shore 85.

7. The system according to any of claims 1 and 2, and comprising a motion assembly, which comprises (i) a motor and (ii) a gear box having (a) a pulley and (b) a belt, wherein the motion assembly is configured to drive the axis mechanism for moving the tray.

8. A method for improving printing quality of an edible image, the method comprising:
placing a sample comprising a flowable-matter substrate on a tray and moving the tray with the sample relative to a printing assembly;
printing the edible image, which is made from an edible substance, on a surface the flowable-matter substrate; and
suppressing vibrations between (i) at least one of the printing assembly, the axis mechanism and the tray, and (ii) the sample, wherein suppressing the vibrations comprises suppressing the vibrations by a compressible bumper (CB), which is coupled to a bracket of an axis mechanism for mechanically supporting the tray and moving the tray.

9. The method according to claim 8, wherein suppressing the vibrations comprises suppressing the vibrations by a base, which is coupled to: (i) an axis mechanism for mechanically supporting the tray and moving the tray, and (ii) a support member that is mechanically supporting the printing assembly.

10. The method according to any of claims 8 and 9, wherein suppressing the vibrations comprises suppressing the vibrations by a pad, which is positioned on the tray for suppressing vibrations between (i) an axis mechanism for mechanically supporting the tray and moving the tray, and (ii) the sample.

11. A production method, comprising:
coupling to a base (i) an axis mechanism for mechanically supporting and moving, along an axis, a tray for placing thereon a sample comprising a flowable-matter substrate, and (ii) a support member, which is coupled to and mechanically supporting, a printing assembly for printing an image, made from an edible substance, on the flowable-matter substrate; and
placing, between (i) the printing assembly and (ii) at least one of the axis mechanism, the tray, and the sample, one or more vibration dampers for suppressing vibrations between (i) at least one of the printing assembly, the axis mechanism, and the tray, and (ii) the sample, wherein placing the one or more vibration dampers comprises coupling to a bracket of the axis mechanism, a compressible bumper (CB) for suppressing vibrations applied to the sample through the axis mechanism.

12. The production method according to claim 11, wherein placing the one or more vibration dampers comprises positioning on the tray a pad for suppressing vibrations between the axis mechanism and the sample.

## Patentansprüche

1. System (11), umfassend:
einer Schale (44), die dazu konfiguriert ist, eine Probe darauf zu platzieren, die mindestens ein erstes Substrat aus fließfähigem Material (69) umfasst;
eine Druckbaugruppe (22), die dazu konfiguriert ist, ein Bild aus einer essbaren Substanz auf eine zweite Schicht (68) aus fließfähigem Material zu drucken, die auf dem ersten Substrat (69) aus fließfähigem Material der Probe gebildet ist;
einen Achsmechanismus (10), der dazu konfiguriert ist, die Schale (44) mechanisch zu stützen und einen Abstand (41) zwischen der Probe und der Druckbaugruppe (22) zu steuern, indem die Schale (44) mit der Probe entlang einer Achse bewegt wird;
ein Stützelement (55, 56), das mit der Druckbaugruppe (22) gekoppelt ist und dazu konfiguriert ist, die Druckbaugruppe (22) mechanisch zu stützen; und
einen oder mehrere Schwingungsdämpfer (37, 45, 111), die zwischen (i) der Druckbaugruppe (22) und (i) mindestens einem von dem Achsmechanismus (10), der Schale (44) und der Probe angeordnet und dazu konfiguriert sind, Schwingungen zwischen (i) mindestens einem von der Druckbaugruppe (22), dem Achsmechanismus (10) und der Schale (44) und (ii) der Probe zu unterdrücken, wobei mindestens einer von dem einen oder den mehreren Schwingungsdämpfer mindestens einen komprimierbaren Puffer (CB) (111) umfasst, der mit einer Halterung (102) des Achsmechanismus (10) gekoppelt ist und dazu konfiguriert ist, Schwingungen zu unterdrücken, die über den Achsmechanismus (10) auf die Probe einwirken.

2. System nach Anspruch 1, wobei der eine oder die mehreren Schwingungsdämpfer eine Basis umfassen, die mit mindestens einem von dem Stützelement und dem Achsmechanismus gekoppelt ist und dazu ausgelegt ist, Schwingungen zwischen dem Stützelement und dem Achsmechanismus zu unterdrücken.

3. System nach Anspruch 1, wobei der komprimierbare Puffer thermoplastisches Polyurethan (TPU) umfasst.

4. System nach Anspruch 3, wobei das TPU eine Härte zwischen Shore 40 und Shore 70 aufweist.

5. System nach einem der Ansprüche 1 und 2, wobei der eine oder die mehreren Schwingungsdämpfer ein Polster umfassen, das auf der Schale positioniert ist und so konfiguriert ist, Schwingungen zwischen dem Achsmechanismus und der Probe zu dämpfen.

6. System nach einem der Ansprüche 1 oder 2, wobei das Polster Silikon mit einer Härte zwischen Shore 60 und Shore 85 umfasst.

7. System nach einem der Ansprüche 1 oder 2 und umfassend eine Antriebsbaugruppe, die (i) einen Motor und (ii) ein Getriebe mit (a) einer Riemenscheibe und (b) einem Riemen umfasst, wobei die Antriebsbaugruppe dazu konfiguriert ist, den Achsmechanismus zum Bewegen der Schale anzutreiben.

8. Verfahren zum Verbessern der Druckqualität eines essbaren Bildes, wobei das Verfahren umfasst:
Platzieren einer Probe, die ein Substrat aus fließfähigem Material umfasst, auf einer Schale und Bewegen der Schale mit der Probe relativ zu einer Druckbaugruppe;
Drucken des essbaren Bildes, das aus einer essbaren Substanz besteht, auf eine Oberfläche des Substrats aus fließfähigem Material; und
Unterdrücken von Schwingungen zwischen (i) mindestens einer von der Druckbaugruppe, dem Achsmechanismus und der Schale und (ii) der Probe, wobei das Unterdrücken der Schwingungen Unterdrücken der Schwingungen durch einen komprimierbaren Puffer (CB) umfasst, der mit einer Halterung eines Achsmechanismus gekoppelt ist, um die Schale mechanisch zu stützen und zu bewegen.

9. Verfahren nach Anspruch 8, wobei das Unterdrücken der Schwingungen Unterdrücken der Schwingungen durch eine Basis umfasst, die gekoppelt ist mit: (i) einem Achsmechanismus zum mechanischen Stützen der Schale und zum Bewegen der Schale, und (ii) einem Stützelement, das die Druckbaugruppe mechanisch stützt.

10. Verfahren nach einem der Ansprüche 8 und 9, wobei das Unterdrücken der Schwingungen Unterdrücken der Schwingungen durch ein Polster umfasst, das auf der Schale positioniert ist, um Schwingungen zwischen (i) einem Achsmechanismus zum mechanischen Stützen und Bewegen der Schale und (ii) der Probe zu unterdrücken.

11. Herstellungsverfahren, umfassend:
Verbinden einer Basis mit (i) einem Achsmechanismus zum mechanischen Stützen und Bewegen einer Schale entlang einer Achse, auf der eine Probe aus einem Substrat aus fließfähigem Material platziert wird, und (ii) einem Stützelement, das mit einer Druckbaugruppe zum Drucken eines Bildes aus einer essbaren Substanz auf das Substrat aus fließfähigem Material gekoppelt ist und diese mechanisch stützt; und
Platzieren eines oder mehrerer Schwingungsdämpfer zwischen (i) der Druckbaugruppe und (ii) mindestens einem von dem Achsmechanismus, der Schale und der Probe, um Schwingungen zwischen (i) mindestens einem von der Druckbaugruppe, dem Achsmechanismus und der Schale und (ii) der Probe zu unterdrücken, wobei das Platzieren des einen oder der mehreren Schwingungsdämpfer Koppeln eines komprimierbaren Puffers (CB) mit einer Halterung des Achsmechanismus umfasst, um Schwingungen zu unterdrücken, die über den Achsmechanismus auf die Probe einwirken.

12. Herstellungsverfahren nach Anspruch 11, wobei das Platzieren des einen oder der mehreren Schwingungsdämpfer Platzieren eines Polsters auf der Schale umfasst, um Schwingungen zwischen dem Achsmechanismus und der Probe zu unterdrücken.

## Revendications

1. Système (11), comprenant :
un plateau (44), qui est configuré pour y placer un échantillon comprenant au moins un premier substrat (69) de matière fluide ;
un ensemble d'impression (22), qui est configuré pour imprimer une image, réalisée à partir d'une substance comestible, sur une deuxième couche de substrat (68) de matière fluide formée sur le premier substrat (69) de matière fluide de l'échantillon ;
un mécanisme d'axe (10), qui est configuré pour supporter mécaniquement le plateau (44) et pour ajuster une distance (41) entre l'échantillon et l'ensemble d'impression (22) en déplaçant le plateau (44) avec l'échantillon le long d'un axe ;
un élément de support (55, 56), qui est couplé à l'ensemble d'impression (22) et est configuré pour supporter mécaniquement l'ensemble d'impression (22) ; et
un ou plusieurs amortisseurs de vibrations (37, 45, 111), placés entre (i) l'ensemble d'impression (22) et (ii) au moins un parmi le mécanisme d'axe (10), le plateau (44) et l'échantillon, et configurés pour supprimer les vibrations entre (i) au moins un parmi l'ensemble d'impression (22), le mécanisme d'axe (10) et le plateau (44), et (ii) l'échantillon, au moins un des un ou plusieurs amortisseurs de vibrations comprenant au moins une butée compressible (CB) (111), qui est couplée à une console (102) du mécanisme d'axe (10) et est configurée pour supprimer les vibrations appliquées à l'échantillon par l'intermédiaire du mécanisme d'axe (10).

2. Système selon la revendication 1, les un ou plusieurs amortisseurs de vibrations comprenant une base, qui est couplée à au moins un parmi l'élément de support et le mécanisme d'axe, et est configurée pour supprimer les vibrations entre l'élément de support et le mécanisme d'axe.

3. Système selon la revendication 1, la butée compressible comprenant du polyuréthane thermoplastique (TPU).

4. Système selon la revendication 3, le TPU présentant une dureté comprise entre Shore 40 et Shore 70.

5. Système selon l'une quelconque des revendications 1 et 2, les un ou plusieurs amortisseurs de vibrations comprenant un tampon, qui est positionné sur le plateau et est configuré pour supprimer les vibrations entre le mécanisme d'axe et l'échantillon.

6. Système selon l'une quelconque des revendications 1 et 2, le tampon comprenant du silicone présentant une dureté comprise entre Shore 60 et Shore 85.

7. Système selon l'une quelconque des revendications 1 et 2, et comprenant en outre un ensemble de déplacement, qui comprend (i) un moteur et (ii) une boîte d'engrenages comportant (a) une poulie et (b) une courroie, l'ensemble de déplacement étant configuré pour entraîner le mécanisme d'axe afin de déplacer le plateau.

8. Procédé d'amélioration de la qualité d'impression d'une image comestible, le procédé comprenant :
le placement d'un échantillon comprenant un substrat de matière fluide sur un plateau et le déplacement du plateau avec l'échantillon par rapport à un ensemble d'impression ;
l'impression de l'image comestible, qui est réalisée à partir d'une substance comestible, sur une surface du substrat de matière fluide ; et
la suppression des vibrations entre (i) au moins un parmi l'ensemble d'impression, le mécanisme d'axe et le plateau, et (ii) l'échantillon, la suppression des vibrations comprenant la suppression des vibrations par une butée compressible (CB), qui est couplée à une console d'un mécanisme d'axe destiné à supporter mécaniquement le plateau et à déplacer le plateau.

9. Procédé selon la revendication 8, la suppression des vibrations comprenant la suppression des vibrations par une base, qui est couplée à : (i) un mécanisme d'axe destiné à supporter mécaniquement le plateau et à déplacer le plateau ; et (ii) un élément de support supportant mécaniquement l'ensemble d'impression.

10. Procédé selon l'une quelconque des revendications 8 et 9, la suppression des vibrations comprenant la suppression des vibrations par un tampon, qui est positionné sur le plateau afin de supprimer les vibrations entre (i) un mécanisme d'axe destiné à supporter mécaniquement le plateau et à déplacer le plateau, et (ii) l'échantillon.

11. Procédé de production, comprenant :
le couplage à une base (i) d'un mécanisme d'axe destiné à supporter mécaniquement et à déplacer, le long d'un axe, un plateau destiné à y placer un échantillon comprenant un substrat de matière fluide, et (ii) un élément de support, qui est couplé à un ensemble d'impression et le supporte mécaniquement, pour imprimer une image, réalisée à partir d'une substance comestible, sur le substrat de matière fluide ; et
le placement, entre (i) l'ensemble d'impression et (ii) au moins un parmi le mécanisme d'axe, le plateau et l'échantillon, d'un ou plusieurs amortisseurs de vibrations destinés à supprimer les vibrations entre (i) au moins un parmi l'ensemble d'impression, le mécanisme d'axe et le plateau, et (ii) l'échantillon, le placement des un ou plusieurs amortisseurs de vibrations comprenant le couplage, à une console du mécanisme d'axe, d'une butée compressible (CB) destinée à supprimer les vibrations appliquées à l'échantillon par l'intermédiaire du mécanisme d'axe.

12. Procédé de production selon la revendication 11, le placement des un ou plusieurs amortisseurs de vibrations comprenant le positionnement, sur le plateau, d'un tampon destiné à supprimer les vibrations entre le mécanisme d'axe et l'échantillon.
